# EUROPEAN PATENT APPLICATION

(11) **EP 3 109 073 A2**
(43) Date of publication of application: **28.12.2016**
(21) Application number: 16275112.7
(22) Date of filing: 09.08.2016
(51) Int. Cl.: B60G 21/055

(54) **A BUSH AND CLAMP ASSEMBLY**

(30) Priority: 25.06.2015 GB 201511176
(71) Applicant: Ford Global Technologies, LLC, Dearborn, MI 48126 (US)
(72) Inventor: Nutting, Matt, Stevenage, Hertfordshire SG1 4RR (GB)
(74) Representative: Rogers, Ivan Mark

(57) **Abstract**

A bush and clamp assembly is disclosed in which a tapered clamping member 40, 140 is used to produce a clamping force acting on a resilient, compressible bush 19, 119, 219 interposed between bridge portions 21, 31; 121, 131; 239 of two clamp members 20, 30; 120, 130; 220, 230. The direction in which the tapered clamping member 40, 140 is inserted into apertures 24, 25 and 34, 35; 224, 225 and 234 in the first and second clamp members 20 and 30; 120 and 130; 220 and 230 is arranged at substantially ninety degrees with respect to the direction C, Z, P in which a clamping force is applied to the resilient, compressible bush 19, 119, 219 by the first and second clamp members 20, 30; 120, 130; 220, 230 due to said insertion.

## Description

This invention relates to a bush such as an anti-roll bar bush and, in particular, to the clamping and attachment of such a bush to a structural component.

It is known from, for example, US Patent 6,871,864 to attach a resilient bush to a structural member of a motor vehicle using a clamp that compresses the bush as the clamp is secured in position.

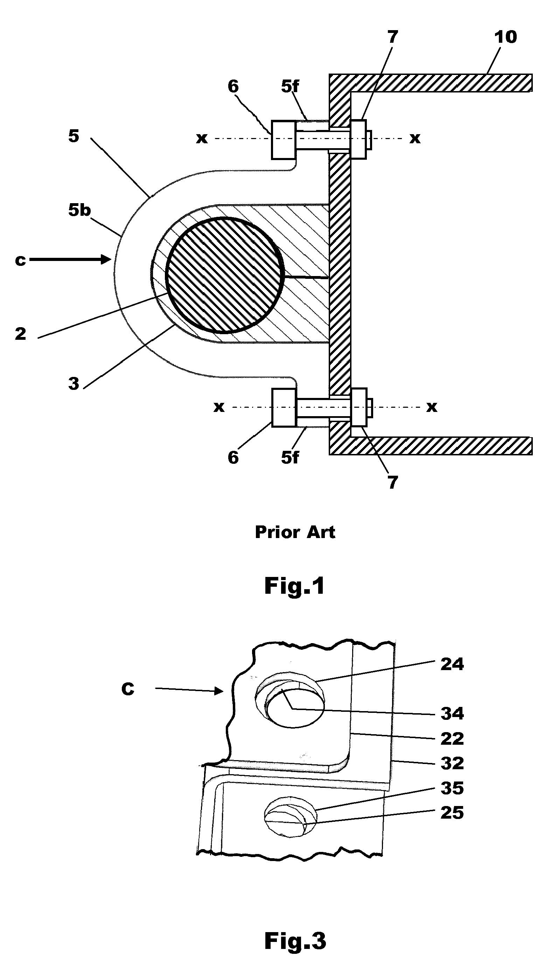

An example of a bush and clamp assembly of this type is shown in Fig.1. The clamp assembly comprises a U-shaped clamp member 5 having a bridge portion 5b connecting two feet 5f by which the clamp member 5 is secured to a bracket or structural member 10. A pair of threaded fasteners 6 are arranged to extend through holes in the feet 5f. The threaded fasteners 6 are threadingly engaged with weld-nuts 7 attached to the bracket 10 to secure the clamp member 5 in place.

A bar or shaft 2 is located within a resilient bush 3 that is compressed by the U-shaped clamp 5 when the threaded fasteners 6 are tightened. The resilient bush 3 is larger in an uncompressed state than an aperture defined between the bridge portion 5b of the U-shaped clamp 5 and the bracket 10 when the U-shaped clamp 5 has been secured to the bracket 10.

The direction of the clamping force applied by the U-shaped clamp 5 is shown in Fig.1 by the arrow 'c' and it will be appreciated that this direction is parallel to longitudinal axes x-x of the two fasteners 6. It will further be appreciated that the two fasteners 6 extend along their respective axes x-x and that insertion of the fasteners 6 is along these axes x-x.

It is a problem in some situations that, due to the location of the bush and clamp assembly and the presence of intervening components, it is not possible to access the ends of the threaded fasteners 6 in order to tighten them or to place the threaded fasteners in position ready for tightening.

It is an object of the invention to provide a bush and clamp assembly that permits clamping of the bush by the use of a clamping member that extends in a direction that is arranged at substantially ninety degrees with respect to the direction in which the clamping load is applied to the bush.

According to the invention there is provided a bush and clamp assembly comprising a first U-shaped clamp member having a pair of spaced apart limbs joined by a bridge portion, a second clamp member having a bridge portion joining first and second spaced apart limbs, a compressible bush interposed between the bridge portions of the first and second clamp members and a tapered clamping member engageable with apertures in the first and second limbs of the first and second clamp members to cause displacement of one of the first and second clamp members relative to the other of the first and second clamp members thereby reducing a distance between the bridge portions of the first and second clamp members so as to compress the bush characterised in that the direction in which the tapered clamping member is inserted into the apertures is arranged at substantially ninety degrees with respect to a direction in which a clamping force is applied to the compressible bush by the relative displacement between the first and second clamp members.

An elongate member may be arranged within the compressible bush and the compression of the compressible bush may act so as to clamp the elongate member in the compressible bush.

The elongate member may extend in a longitudinal direction that is arranged at substantially ninety degrees with respect to both the direction in which the clamping member is inserted into the apertures and the direction in which a clamping force is applied to the compressible bush by the relative displacement between the first and second clamp members.

The elongate member may be a motor vehicle anti-roll bar.

The tapered clamping member may have a frusto conical shank portion.

The tapered clamping member may be a bolt having a head, a threaded end portion and tapered shank located therebetween. In which case, the tapered shank may be a frusto conical shank bounded at each end by a cylindrical land.

The second clamp member may be one of a bracket for attachment to a structural member and a structural member.

The structural member may be a structural member forming part of a motor vehicle.

The invention will now be described by way of example with reference to the accompanying drawing of which:-
Fig.1 is a diagrammatic end view of a prior art bush and clamp assembly;
Fig.2 is a side view of a first embodiment of a bush and clamp assembly according to the invention;
Fig.3 is a pictorial view on an enlarged scale taken from above showing the misalignment of apertures in clamp and bracket components of the bush and clamp assembly shown in Fig.2 prior to final assembly;
Fig.4 is a side view of a clamping member forming part of the bush and clamp assembly shown in Fig.2;
Fig.5 is a cross-sectioned side view of part of the bush and clamp assembly shown in Fig.2 showing a first stage in the insertion of the clamping member into the clamp and bracket components;
Fig.6 is a view similar to Fig.5 but showing the clamping member secured in a final clamping position;
Fig.7 is a view similar to Fig.2 but showing a second embodiment of a bush and clamp assembly according to the invention; and
Fig.8 is a pictorial exploded diagram of a third embodiment of a bush and clamp assembly according to the invention.

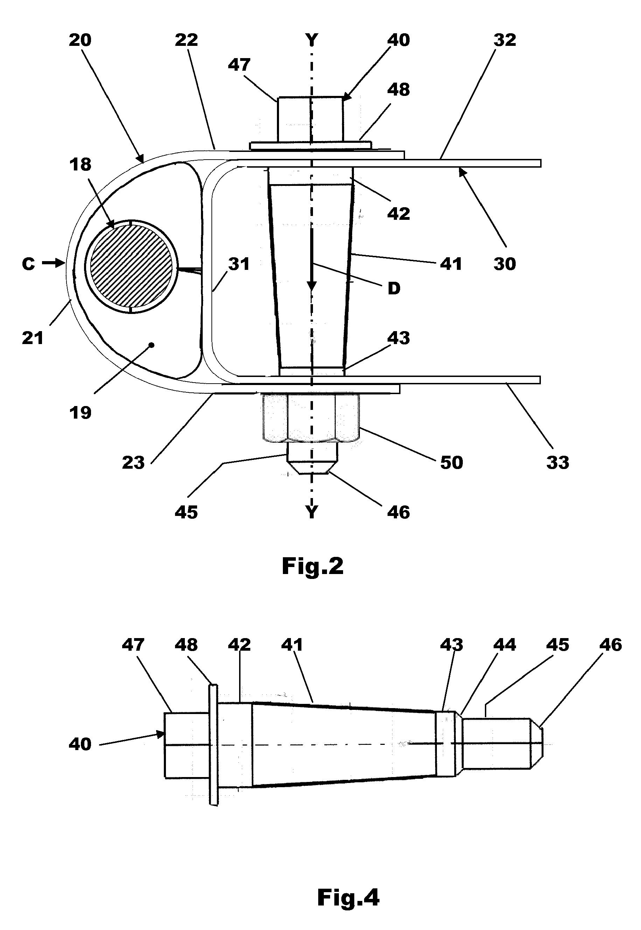

With reference to Figs.2 and 4 there is shown a first embodiment of a bush and clamp assembly. The bush and clamp assembly comprises of a first clamp member in the form of a U-shaped clamp member 20 engaged with a second clamp member in the form of a U-shaped bracket 30, a split resilient, compressible bush 19, an elongate member which in this case is an anti-roll bar 18 of a motor vehicle (not shown) and a clamping member 40 engaged with apertures 24, 25 and 34, 35 in the clamp member 20 and bracket member 30 respectively.

The U-shaped clamp member 20 has a first limb portion 22 defining an aperture 24 therein, a second limb portion 23 defining an aperture 25 therein and a curved bridge portion 21 joining the first and second limb portions 22 and 23 together. The U-shaped clamp member 20 is made in this case from a single piece of pressed steel strip.

The U-shaped bracket member 30 has a first limb portion 32 defining an aperture 34 therein, a second limb portion 33 defining an aperture 35 therein and a flat bridge portion 31 joining the first and second limb portions 32 and 33 together. The U-shaped bracket member 30 is made in this case from a single piece of pressed steel strip.

The two limb portions 32, 33 are, in use, fastened by any convenient method such as, for example and without limitation, welding or bolting to a structural part of the motor vehicle of which the anti-roll bar 18 forms a part.

The clamp member 20 is engaged with the bracket member 30 so that inner surfaces of first and second limbs 22, 23 of the clamp member 20 interface with outer surfaces of the first and second limbs 32,and 33 of the bracket member 30. The bracket member 30 is therefore in the case of this example sandwiched between the first and second limbs 22 and 23 of the clamp member 20.

The tapered clamping member is in this case in the form of a bolt 40 having a tapered shank 41 bounded at each end by respective first and second cylindrical lands 42, 43, a head 47, a load spreading flange 48 adjacent the head 47, and a threaded portion 45 at the opposite end of the bolt 40 to the location of the head 47. The bolt 40 has a longitudinal axis Y-Y that, when the bolt 40 is in a fully secured state, is arranged at substantially ninety degrees to the direction in which a clamping force is applied to the resilient, compressible bush 19. The direction of the clamping force is indicated by an arrow C on Figs.2 and 3.

A lead-in or chamfer 44 is provided between the second cylindrical land 43 and the threaded portion 45. A free end of the threaded portion 45 also has a chamfer 46 thereon. The chamfers 44, 46 are provided to ease the insertion of the bolt 40 into the apertures 24, 25 and 34, 35 in the clamp member 20 and bracket member 30 respectively.

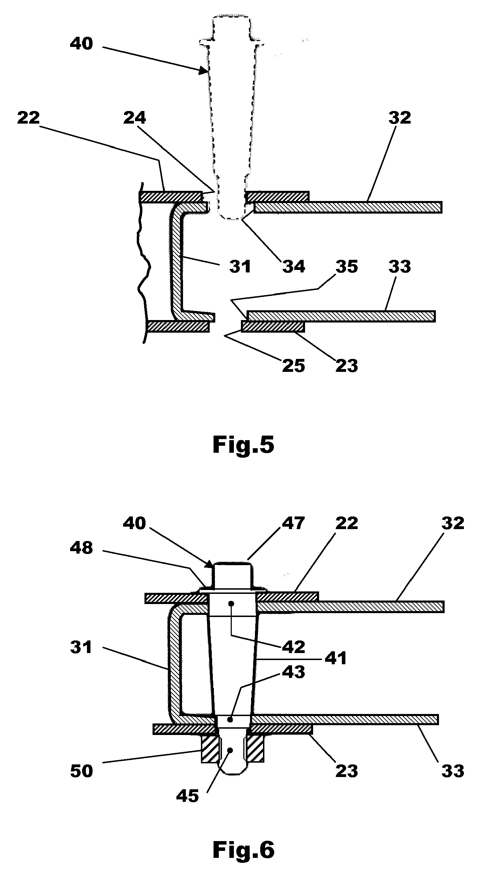

As best seen in Fig.3 and 5 the apertures 24, 25 in the clamp member 20 are displaced or misaligned with respect to the apertures 34, 35 in the bracket member 30 prior to the insertion of the bolt 40. This misalignment is due to a mismatch between the uncompressed width of the resilient, compressible bush 19 and the gap present between an inner face of the bridge portion 21 of the clamp member 20 and an outer face of the bridge portion 31 of the bracket member 30. That is to say the width of the uncompressed resilient, compressible bush 19 is greater than the gap between the bridge portions 21, 31 when all of the apertures 24, 34; 25, 35 are aligned.

When the bolt 40 is first inserted into the apertures 24, 25; 34, 35 the tapered shank 41 interacts with the apertures 24, 34 in the first limb portions 22, 32 of the clamp and bracket members 20 and 30 so as to displace the clamp member 20 in the direction of the arrow C on Figs.2 and 3. The lead-in chamfer 44 assists with the initial insertion of the bolt 40 with the apertures 24, 34. When the bolt 40 is pushed further into engagement in the direction indicated by an arrow 'D' on Fig.2, the lead-in chamfer 44 will assist with the engagement of the second cylindrical land 43 with the apertures 25, 35 in the second limb portions 23, 33 of the clamp and bracket member 20 and 30 as the nut 50 is tightened on the threaded portion 45 of the bolt 40.

The insertion of the bolt 40 causes the clamp member 20 to be displaced relative to the bracket member 30 so that the curved bridge portion 21 of the clamp member 20 is moved closer to the flat bridge portion 31 of the bracket member 30 thereby compressing the resilient, compressible bush 19 and clamping the anti-roll bar 18 in the resilient, compressible bush 19.

It will be appreciated that the diameter of the apertures 24, 34 in the first limbs 22, 32 of the clamp and bracket members 20 and 30 are substantially the same. Similarly, the diameter of the apertures 25, 35 in the second limbs 23, 33 of the clamp and bracket members 20 and 30 are substantially the same. However, the diameter of the apertures 24, 34 in the first limbs 22, 32 is larger than the diameter of the apertures 25, 35 in the second limbs 23, 33.

As best seen in Fig.6, when the bolt 40 is fully secured in position the first cylindrical portion 42 is engaged with the apertures 24, 34 in the first limbs 22, 32 and the second cylindrical land 43 is engaged with the apertures 25, 35 in the second limbs 23, 33.

It will be appreciated that the direction 'D' that the bolt 40 is inserted in is arranged at substantially ninety degrees with respect to the direction 'C' in which a clamping force is applied to the resilient, compressible bush 19 by the displacement of the clamp member 20 relative to the bracket member 30.

It will be appreciated that it is not necessary with such an arrangement to have access to the clamping member 40 in a direction parallel to the direction of clamping indicated by the arrow 'C' on Figs.2 and 3. Therefore a bush and clamp assembly in accordance with this invention can be used in locations where access to a conventional bush and clamp assembly of the type shown in Fig.1 would prevent its use.

The tapered shank is in the case of this example described above a frusto-conical shank however it will be appreciated that the shank could have part cylindrical side portions and tapering front and rear faces that interact with the apertures 24, 34; 23, 25 in the first and second limbs 22, 32 and 23, 33.

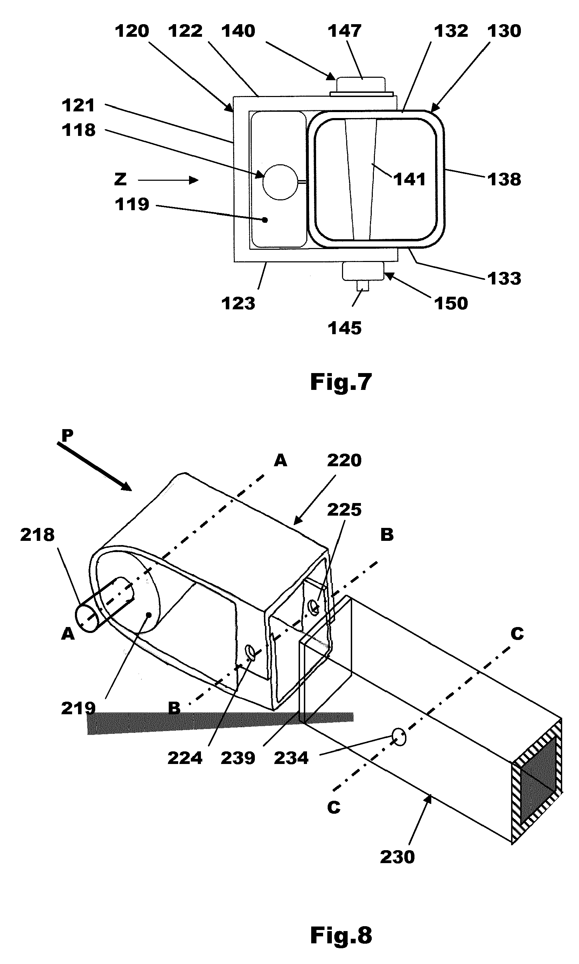

With reference to Fig.7 there is shown a second embodiment of a bush and clamp assembly that in most respects is the same as that previously described and differs primarily in that instead of the second clamp member being a bracket member it is a structural component 130 which in this case is in the form of a box section tube.

The bush and clamp assembly comprises of a U-shaped clamp member 120 having limbs 122, 123 engaged with the structural member 130 and a clamping member 140 that is engaged with apertures (not shown) in the clamp member 120 and the structural member 130. A resilient, compressible bush 119 supports a shaft or bar which in this case is an anti-roll bar 118 of a motor vehicle (not shown). The resilient compressible bush 119 is clamped in use between the U-shaped clamp member 120 and the structural member 130.

The U-shaped clamp member 120 is identical to the clamp member 20 previously described and so will not be described again in detail identical part having the same reference numeral with the addition of 100.

The structural member 130 has an upper wall 132 forming a first limb portion 132 having an aperture therein, a lower wall 133 forming a second limb portion having an aperture therein, a front wall 131 forming a first bridge portion joining front ends of the first and second limb portions 132 and 133 together and a rear wall 138 forming a second bridge portion joining rear ends of the first and second limb portions 132 and 133 together. It will be appreciated that the terms 'upper', 'lower', 'front' and 'rear' are provided by way of example and that the orientation of the structural member 130 could be different to that shown.

The clamping member 140 is identical to the bolt 40 and identical parts have the same reference numeral with the addition of 100. The clamping member 140 will not therefore be described again in detail.

As before, when the bolt 140 is inserted into the apertures in the U-shaped clamp member 120 and the structural member 130 the tapered shank 141 interacts with the apertures in the first limb portions 122, 132 of the clamp and structural members 120 and 130 so as to displace the clamp member 120 in the direction of the arrow 'Z' on Fig.7.

Therefore, as before, the direction of insertion of the bolt 140 is substantially at right angles to the direction 'Z' in which the clamping force is applied to the resilient, compressible bush 119 by the displacement of the U-shaped clamp member 120 thereby clamping the bar 118 in position and prevent relative rotation between the bar 118 and the resilient, compressible bush 119.

The invention has so far been described with reference to embodiments in which the clamping member is arranged at substantially ninety degrees with respect to both the direction of clamping and a longitudinal axis of the bar. In Fig.8 there is shown diagrammatically an arrangement in which the clamping member is arranged at substantially ninety degrees with respect to the direction of clamping but is arranged parallel to the longitudinal axis of the bar.

As before there are first and second clamp members 220 and 230 that co-operate with one another to clamp a bush 219 supporting an anti-roll bar 218. The anti-roll bar 218 extends along a longitudinal axis A-A arranged at substantially ninety degrees to the direction in which the compressible bush 219 is clamped by the first clamp member 320. A tapered bolt (not shown) is engageable with apertures 224, 225 lying on an axis B-B in the first clamp member 220 and with correspond apertures 234 lying on an axis C-C in the second clamp member 230.

The second clamp member 230 has an end plate 239 that when the second clamp member 230 is inserted into the first clamp member 220 presses against the compressible bush 219.

As before the apertures 224, 225 in the first clamp member 220 are misaligned with the apertures 234 in the second clamp member 230 until the tapered bolt is inserted. Insertion of the tapered bolt will cause the first clamp member 220 to be drawn towards the second clamp member 230 thereby compressing the compressible bush 219 by applying a clamping force in the direction of the arrow 'P' on Fig.8.

When the first and second clamp members 220 and 230 are fully assembled with the tapered bolt in place the axes B-B and C-C are coaxially aligned with a longitudinal axis of the tapered bolt.

Although the invention has been described with reference to embodiments in which the tapered clamping member is a tapered bolt it will be appreciated that it is not limited to such a clamping member. For example and without limitation, the tapered clamping member could be a tapering rod having thick and thin ends. The thin end having a threaded bore with which a threaded fastener such as a bolt is engaged to draw the tapering rod into position.

Although the invention has been described with reference to its use for supporting a motor vehicle ant-roll bar it will be appreciated that it could be used for other uses where a shaft, bar or tube needs to be attached to a support component or member by a bush and clamp assembly.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A bush and clamp assembly comprising a first U-shaped clamp member (20; 120; 220) having a pair of spaced apart limbs (22, 23; 122, 123) joined by a bridge portion (21; 121) a second clamp member (30; 130; 230) having a bridge portion (31; 131; 239) joining first and second spaced apart limbs (32, 33; 132, 133) a compressible bush (19; 119; 219) interposed between the bridge portions (21, 121; 31, 131; 239) of the first and second clamp members (20 and 30; 120 and 130; 220 and 230) and a tapered clamping member (40; 140) engageable with apertures (24, 25 and 34, 35; 224, 225 and 234) in the first and second limbs (22, 23 and 32, 33; 122, 123 and 132, 133) of the first and second clamp members (20 and 30; 120 and 130; 220 and 230) to cause displacement of one of the first and second clamp members (20 and 30; 120 and 130; 220 and 230) relative to the other of the first and second clamp members (20 and 30; 120 and 130; 220 and 230) thereby reducing a distance between the bridge portions (21, 31; 121; 131) of the first and second clamp members (20 and 30; 120 and 130) so as to compress the bush (19; 119; 219) **characterised in that** the direction in which the tapered clamping member (40; 140) is inserted into the apertures (24, 25, 34, 35; 224, 225, 234) is arranged at substantially ninety degrees with respect to a direction in which a clamping force is applied to the compressible bush (19, 119; 219) by the relative displacement between the first and second clamp members (20 and 30; 120 and 130; 220 and 230).

2. An assembly as claimed in claim 1 wherein an elongate member (18; 118; 218) is arranged within the compressible bush (19; 119; 219) and the compression of the compressible bush (19; 119; 219) acts so as to clamp the elongate member (18; 118; 218) in the compressible bush (19; 119; 219).

3. An assembly as claimed in claim 2 wherein the elongate member (18; 118) extends in a longitudinal direction that is arranged at substantially ninety degrees with respect to both the direction in which the clamping member (40; 140) is inserted into the apertures (24, 25, 34, 35) and the direction in which a clamping force is applied to the compressible bush (19; 119) by the relative displacement between the first and second clamp members (20 and 30; 120 and 130).

4. An assembly as claimed in claim 1 or in claim 2
wherein the elongate member is a motor vehicle anti-roll bar (18; 118; 218).

5. An assembly as claimed in any of claims 1 to 4
wherein the tapered clamping member (40; 140) has a frusto conical shank portion (41; 141).

6. An assembly as claimed in any of claims 1 to 4
wherein the tapered clamping member is a bolt having a head (47; 147), a threaded end portion (45; 145) and tapered shank (41; 141) located therebetween.

7. An assembly as claimed in claim 6 wherein the tapered shank is a frusto conical shank (41) bounded at each end by a cylindrical land (42, 43).

8. An assembly as claimed in any of clams 1 to 7
wherein the second clamp member (30; 130; 230) is one of a bracket for attachment to a structural member and a structural member.

9. An assembly as claimed in claim 8 wherein the structural member is a structural member forming part of a motor vehicle.
